# EUROPÄISCHE PATENTANMELDUNG

(11) **EP 4 813 187 A1**
(43) Veröffentlichungstag der Anmeldung: **30.09.2026**
(21) Anmeldenummer: 26152877.2
(22) Anmeldetag: 20.01.2026
(51) Int. Cl.: A01B 73/00, A01D 78/10, F15B 1/02, A01B 63/10

(54) **LANDWIRTSCHAFTLICHE MASCHINE**

(30) Priorität: 25.03.2025 DE 202025101593 U
(71) Anmelder: Pöttinger Landtechnik GmbH, 4710 Grieskirchen (AT)
(72) Erfinder: KLEESADL, Gerhard, 4710 Grieskirchen (AT); JUNGREITHMAYER, Martin, 4710 Grieskirchen (AT); LINDINGER, Christian, 4710 Grieskirchen (AT); EHRENTRAUT, Michael, 4710 Grieskirchen (AT); SCHIMPF, Sebastian, 4710 Grieskirchen (AT); ANGLEITNER, Norbert, 4710 Grieskirchen (AT); POINTNER, Christoph, 4710 Grieskirchen (AT)
(74) Vertreter: Lorenz Seidler Gossel Part. mbB

(57) **Zusammenfassung**

Die vorliegende Erfindung betrifft eine landwirtschaftliche Maschine zum Anbau an einen Schlepper, vorzugsweise in Form eines Mähwerks, Schwaders oder Mergers, mit zumindest einem Arbeitsaggregat, zumindest einem Hubzylinder zum Anheben des Arbeitsaggregats in eine Vorgewende- und/oder Transportstellung, und einem Entlastungsdruckspeicher zur Beaufschlagung des Hubzylinders und/oder eines zusätzlichen Entlastungszylinders mit einem Entlastungsdruck zum Gewichtsentlasten des Arbeitsaggregats in einer abgesenkten Arbeitsstellung. Erfindungsgemäß wird vorgesehen, dass der Entlastungsdruckspeicher und/oder ein zusätzlicher Dämpfungsdruckspeicher in der ausgehobenen Vorgewende- und/oder Transportstellung mit dem Hubzylinder strömungsverbunden ist, so dass der genannte Hubzylinder in der Vorgewende- und/oder Transportstellung mit einem Dämpfungsdruck aus dem Entlastungsdruckspeicher und/oder aus dem Dämpfungsdruckspeicher beaufschlagt ist.

## Beschreibung

Die vorliegende Erfindung betrifft eine landwirtschaftliche Maschine zum Anbau an einen Schlepper, vorzugsweise in Form eines Mähwerks, Schwaders oder Mergers, mit zumindest einem Arbeitsaggregat, zumindest einem Hubzylinder zum Anheben des Arbeitsaggregats in eine Vorgewende- und/oder Transportstellung, und einem Entlastungsdruckspeicher zur Beaufschlagung des Hubzylinders und/oder eines zusätzlichen Entlastungszylinders mit einem Entlastungsdruck zum Gewichtsentlasten des Arbeitsaggregats in einer abgesenkten Arbeitsstellung.

Eine Landmaschine der genannten Art ist beispielsweise aus der Schrift DE 10 2006 002 066 A1 oder der DE 10 2008 057 716 A1 bekannt. Das an einem Anbau- bzw. Tragrahmen höhenverstellbar aufgehängte Arbeitsaggregat kann mittels eines Hubzylinders aus der abgesenkten Arbeitsstellung in eine angehobene Vorgewendestellung und/oder in eine angehobene Transportstellung angehoben werden. Um in der abgesenkten Arbeitsstellung, in der das Arbeitsaggregat über den Boden geführt wird, eine Gewichtsentlastung zu erreichen, wirkt auf das Arbeitsaggregat ein Entlastungszylinder ein, der mit einem einstellbaren Entlastungsdruck beaufschlagt wird. Durch die hierdurch erzeugte Entlastungskraft, die der Gewichtskraft des Arbeitsaggregats entgegenwirkt, kann das Arbeitsaggregat besser der Bodenkontur folgen und sozusagen leichtfüßig über Bodenwellen hinwegschweben, ohne dass das Arbeitsaggregat von seinem beträchtlichen Eigengewicht beim Auffahren auf Bodenwellen in das Erdreich graben würde.

Derartige Entlastungszylinder sind jedoch bisweilen beim Anheben des Arbeitsaggregats in die Vorgewende- bzw. Transportstellung problematisch. Wird - je nach Arbeitsbedingungen - der Entlastungsdruck, der üblicherweise mittels eines Druckspeichers aufgebracht wird, auf einen recht niedrigen Wert eingestellt, führt dies beim Anheben des Arbeitsaggregats dazu, dass der Entlastungszylinder nachgibt und die Maschine nicht mehr vollständig ausgehoben bzw. zusammengeklappt wird. Eine entsprechende Problematik kann beispielsweise bei der Bearbeitung von Schrägflächen auftreten. Die genannte DE 10 2008 057 716 A1 schlägt zur Abmilderung der genannten Problematik vor, den Entlastungsdruck beim Anheben der Maschine automatisch zu erhöhen, indem eine Hubdruckseite des Hubzylinders, die beim Anheben des Arbeitsaggregats druckbeaufschlagt ist, über eine Druckübertragungseinrichtung mit einer Entlastungsdruckseite des Entlastungszylinders zu verbinden. Da der Druck des Hubzylinders beim Anheben der Maschine gegenüber der Arbeitsstellung deutlich ansteigt, kann durch die Druckübertragung auch im Entlastungszylinder beim Anheben ein ausreichender Druckanstieg erzeugt werden, um den Druckspeicher für den Entlastungsdruck auf Anschlag bzw. in eine Endstellung zu fahren, in der der Druckspeicher faktisch unwirksam ist und nicht mehr nachgibt, so dass die ausgehobene Vorgewende- und/oder Transportstellung verzögerungsfrei und präzise angefahren werden kann.

Durch das Totschalten des Druckspeichers für den Entlastungsdruck, wie es die DE 10 2008 057 716 A1 für die ausgehobene Vorgewende- und/oder Transportstellung vorschlägt, kann das Arbeitsaggregat über den nach oben geschwenkten Tragarm zwar stabil und präzise in der gewünschten Aushubstellung gehalten werden, allerdings werden die mechanischen Bauteile einschließlich des Hubzylinders, des Trag- bzw. Hubarms und der gelenkigen Verbindungen stark auf Verschleiß beansprucht, was einerseits durch ruckartiges Stoppen bzw. Anfahren im Aushubbetrieb selbst zustande kommt, vor allen Dingen aber aus den Stößen vom Schlepper bzw. Fahrwerk her verursacht wird, wenn in der ausgehobenen Stellung im Vorgewende über Bodenunebenheiten hinweggefahren oder im Straßentransport bei höherer Geschwindigkeit in Schlaglöcher gefahren wird. Da die Gewichts- und daher Trägheitskräfte des Arbeitsaggregats recht hoch sind, treten bei ungünstigen Hebelverhältnissen hohe, stoßhafte Spitzenbelastungen auf, die über den genannten Verschleiß hinaus auch zu unmittelbaren Beschädigungen führen können, wie beispielsweise zum Reißen von Schweißnähten am Tragarm bzw. Maschinenrahmen im Bereich der dortigen Gelenk- und Anlenkpunkte.

Von der genannten Neigung zu höherem Verschleiß und Beschädigungen abgesehen, wird auch das Fahrverhalten der Maschine negativ beeinflusst. Beispielsweise kann durch Aufschaukeltendenzen das Nachlaufverhalten bzw. die Spurtreue negativ beeinflusst werden.

Um solche starken Materialbeanspruchungen in der ausgehobenen Stellung der Arbeitsaggregate zu vermeiden, schlägt die Schrift EP 25 21 433 B1 eine passive Ausbildung der Aushubhydraulik vor, um eine gewisse Nachgiebigkeit für die Fixierung der Arbeitsaggregate in der ausgehobenen Stellung zu erreichen. Dabei wird mit einem Strömungssteuerventil ein gewisser Druckausgleich zu einem Druckspeicher hin zugelassen, wobei das genannte Strömungssteuerventil in der abgesenkten Arbeitsstellung und auch in Zwischenstellungen entlang des Aushubwegs abgesperrt werden soll, um einerseits eine leichtfüßige Bodenanpassung nicht zu beeinträchtigen und andererseits keine erhöhten Aushubwiderstände zu haben.

Hiervon ausgehend liegt der vorliegenden Erfindung die Aufgabe zugrunde, eine verbesserte Landmaschine der genannten Art zu schaffen, die Nachteile des Standes der Technik vermeidet und Letzteren in vorteilhafter Weise weiterbildet. Vorzugsweise soll mit einfachen Mitteln ein Anheben bzw. Zusammenklappen der Maschine ermöglicht und in der angehobenen Vorgewende- und/oder Transportstellung ein sicheres Führen des Arbeitsaggregats ohne Überbelastung der Aushubmechanik erreicht werden, ohne dies mit Einbußen bei der optimalen Entlastungswirkung in der Arbeitsstellung zu erkaufen.

Erfindungsgemäß wird diese Aufgabe durch eine Landmaschine gemäß Anspruch 1 gelöst. Bevorzugte Ausgestaltungen der Erfindung sind Gegenstand der abhängigen Ansprüche.

Es wird also vorgeschlagen, ein geschicktes Zusammenspiel von Entlastungsdruck in der abgesenkten Arbeitsstellung und Dämpfungsdruck in der ausgehobenen Vorgewende- und/oder Transportstellung vorzusehen, um trotz unterschiedlicher Anforderungen in Arbeitsstellung einerseits und Vorgewende- bzw. Transportstellung andererseits eine leichtfüßige Bodenanpassung mit einer Bewegungsdämpfung in der ausgehobenen Vorgewende- und/oder Transportstellung zu kombinieren. Erfindungsgemäß wird vorgesehen, dass der Entlastungsdruckspeicher und/oder ein zusätzlicher Dämpfungsdruckspeicher in der ausgehobenen Vorgewende- und/oder Transportstellung mit dem Hubzylinder strömungsverbunden ist, so dass der genannte Hubzylinder in der Vorgewende- und/oder Transportstellung mit einem Dämpfungsdruck aus dem Entlastungsdruckspeicher und/oder aus dem Dämpfungsdruckspeicher beaufschlagt ist. Während die angestrebte Leichtfüßigkeit in der abgesenkten Arbeitsstellung für eine gute Bodenanpassung an sich eine geringe Trägheit bzw. geringe Bewegungsdämpfung verlangt, wird eine solche Dämpfungswirkung in der ausgehobenen Vorgewende- und/oder Transportstellung in erhöhtem Maße angestrebt, wobei beide Facetten durch einen jeweils abgestimmten Entlastungsdruck, der in der abgesenkten Arbeitsstellung auf den Hubzylinder bzw. einen separaten Entlastungszylinder gegeben wird, und andererseits durch einen Dämpfungsdruck, der in der ausgehobenen Vorgewende- bzw. Transportstellung auf den Hubzylinder gegeben wird, erreicht werden können.

Um beiden Aufgaben leichtfüßige Bodenanpassung in der Arbeitsposition und stärkere Bewegungsdämpfung in der Vorgewende- bzw. Transportstellung gleichermaßen gerecht zu werden, werden die genannten Entlastungs- und Dämpfungsdrücke vorteilhafterweise jeweils individuell auf ihre Aufgabe abgestimmt, wobei der Dämpfungsdruck zur Bewegungsdämpfung in der ausgehobenen Vorgewende- bzw. Transportstellung vom benötigten Entlastungsdruck zum Gewichtsentlasten in der Arbeitsposition in stärkerem Maße verschieden sein kann, je nach Kinematik und Hebelverhältnissen des Hubarms, der das Arbeitsaggregat trägt, und des daran angelenkten Hubzylinders bzw. des ggf. separaten Entlastungszylinders.

In vorteilhafter Weiterbildung der Erfindung lassen sich die Entlastungs- und Dämpfungsdrücke in vorteilhafter Weise dadurch jeweils individuell an ihre verschiedenen Anforderungen anpassen, dass der Dämpfungsdruck mit Hilfe eines separaten Dämpfungsdruckspeichers bereitgestellt bzw. zumindest unterstützt wird und der Entlastungsdruck zum Gewichtsentlasten in der abgesenkten Arbeitsstellung vom genannten Entlastungsdruckspeicher an den Hubzylinder bzw. alternativ oder zusätzlich an einen separaten Entlastungszylinder angelegt wird, so dass der Dämpfungsdruckspeicher und der Entlastungsdruckspeicher in einfacher Weise individuell an ihre Aufgaben angepasst werden können, insbesondere hinsichtlich des Druckniveaus.

Soweit in der abgesenkten Arbeitsstellung durchaus ein gewisser Bodenauflagedruck erwünscht sein kann, um eine Bodenanpassung auch beim Einfahren in Senken verlässlich sicherzustellen, kann der Entlastungsdruck in der Arbeitsstellung deutlich kleiner sein als der Dämpfungsdruck für die Vorgewende- und/oder Transportstellung, auch wenn in der abgesenkten Arbeitsposition die Hebelverhältnisse an sich schlechter sind.

Beispielsweise kann der Dämpfungsdruck für die Vorgewende- und/oder Transportstellung doppelt so groß oder mehr als doppelt so groß oder auch mehr als dreifach so groß sein als der Entlastungsdruck in der abgesenkten Arbeitsposition, wobei dieses Verhältnis der beiden Drücke auch anders ausgebildet werden kann, wenn schwerere Arbeitsaggregate mit weniger Bodendruck gefahren werden sollen, so wie dies beispielsweise bei Mähwerken der Fall ist, während umgekehrt deutlich kleinere Entlastungsdrücke als Dämpfungsdrücke gefahren werden können, wenn Arbeitsaggregate mit größerer Bodenaufstandskraft gefahren werden sollen, so wie dies beispielsweise bei Rechkreiseln von Schwadern der Fall ist.

Der Entlastungsdruckspeicher einerseits und der Dämpfungsdruckspeicher andererseits können insofern hinsichtlich ihres Volumens und/oder hinsichtlich ihres bereitgestellten Drucks verschieden voneinander ausgebildet sein.

Unabhängig von der konkreten Ausbildung der Druckspeicher kann es vorteilhaft sein, wenn der Entlastungsdruckspeicher mittels einer Ventileinrichtung in der ausgehobenen Vorgewende- und/oder Transportstellung vom Hubzylinder abgesperrt werden kann und - gegebenenfalls nur - in der abgesenkten Arbeitsstellung mit dem Hubzylinder oder dem Entlastungszylinder strömungsverbunden ist. Durch ein Absperren des Entlastungsdrucks in der ausgehobenen Vorgewende- und/oder Transportstellung kann der Dämpfungsdruck im Hubzylinder unbeeinflusst vom Entlastungsdruckspeicher bereitgestellt werden.

An sich könnte der Dämpfungsdruckspeicher auch ohne Absperrventil permanent mit dem Entlastungsdruckspeicher und/oder dem Hubzylinder verbunden sein, wenn für das Ausheben in die Vorgewende- bzw. Transportstellung der Druck im Entlastungssystem deutlich erhöht wird, so dass der Entlastungszylinder sozusagen auf Anschlag gefahren wird und keine Volumenänderungen mehr erfährt. Allerdings kann es im Vorgewende bzw. auch beim Straßentransport beim Einfahren in Schlaglöcher oder über Bodenunebenheiten hinweg auch zu dem Effekt kommen, dass das Arbeitsaggregat ausgehoben und damit sehr viel leichter wird, so dass eine Aufwärtsbewegung trotz des Aggregatsgewichts erfolgen kann. Durch einen dabei auftretenden Druckverlust könnte dann der Entlastungszylinder selbst wieder eine Volumenänderung erfahren und den Dämpfungsvorgang beeinflussen.

Andererseits kann der Dämpfungsdruckspeicher in Weiterbildung der Erfindung sowohl in der ausgehobenen Vorgewende- und/oder Transportstellung als auch in der abgesenkten Arbeitsstellung mit dem Hubzylinder strömungsverbunden sein. Ein solches Konzept geht von der Überlegung aus, dass in der abgesenkten Arbeitsstellung der Druck im Hubzylinder gegenüber der Vorgewende- bzw. Transportstellung deutlich abfällt. Wird ein separater Entlastungszylinder für die Gewichtsentlastung in der Arbeitsposition verwendet, kann der Druck im Hubzylinder gegen null gehen. Wird der Hubzylinder gleichzeitig auch für die Gewichtsentlastung in der abgesenkten Arbeitsposition verwendet, sinkt der Druck im Hubzylinder bis auf das Entlastungsdruckniveau ab, welches deutlich unter dem Dämpfungsdruck in der Vorgewende- bzw. Transportstellung liegen kann. In beiden Fällen kann der auf deutlich höherem Druckniveau arbeitende Dämpfungsdruckspeicher beim Absenken in die Arbeitsposition auf Anschlag fahren, da ihm ein ausreichender Gegendruck aus dem Hubzylinder fehlt, so dass der Dämpfungsdruckspeicher faktisch inaktiv wird und trotz grundsätzlich gegebener Strömungsverbindung des Dämpfungsdruckspeichers zum Hubzylinder in der Arbeitsposition die Gewichtsentlastung nur noch vom Entlastungsdruck aus dem Entlastungsdruckspeicher bereitgestellt wird.

Alternativ kann aber auch dem Dämpfungsdruckspeicher eine Ventileinrichtung zugeordnet sein, mit Hilfe derer der Dämpfungsdruckspeicher in der abgesenkten Arbeitsposition vom Hubzylinder abgesperrt wird bzw. auch generell von anderen Leitungen des Druckkreises abgesperrt werden kann, so dass der Dämpfungsdruckspeicher in der abgesenkten Arbeitsposition inaktiv ist bzw. sozusagen totgeschaltet ist.

Bei Verwendung einer Ventileinrichtung zum Absperren des Dämpfungsdruckspeichers und/oder des Entlastungsdruckspeichers ist es in Weiterbildung der Erfindung einfach möglich, auf einen separaten Entlastungszylinder zu verzichten und auch die Gewichtsentlastung in der Arbeitsstellung über den Hubzylinder zu bewirken. Insbesondere können der Entlastungsdruckspeicher und der Dämpfungsdruckspeicher auf dieselbe Hubkammer des Hubzylinders schaltbar sein, wobei in der abgesenkten Arbeitsstellung beide Entlastungs- und Dämpfungsdruckspeicher gleichzeitig mit der genannten Hubdruckkammer des Hubzylinders strömungsverbunden sein können und in der ausgehobenen Vorgewende- und/oder Transportstellung nur der Dämpfungsdruckspeicher mit der Hubdruckkammer des Hubzylinders strömungsverbunden ist. Dies kann beispielsweise durch eine Ventileinrichtung erreicht werden, die den Entlastungsdruckspeicher beim Ausheben des Arbeitsaggregats in die Vorgewende- und/oder Transportstellung absperrt, so dass nur noch der Dämpfungsdruckspeicher mit der genannten Hubkammer des Hubzylinders strömungsverbunden ist.

Beim Absenken in die Arbeitsstellung des Arbeitsaggregats kann die genannte Ventileinrichtung den Entlastungsdruckspeicher wieder auf die genannte Hubdrucckammer des Hubzylinders schalten, um den Entlastungsdruck bereitzustellen, wobei der Dämpfungsdruckspeicher abgesperrt wird oder bei entsprechender Druckdifferenz auf Anschlag fahren kann. Hierdurch lässt sich in einfacher Weise sowohl für die Vorgewende- bzw. Transportstellung als auch für die abgesenkte Arbeitsposition der für die jeweilige Aufgabe passende Druck bereitstellen, wobei die Drücke auch deutlich voneinander verschieden sein können.

Grundsätzlich wäre es auch denkbar, mit nur einem Druckspeicher zu arbeiten, und zwar insbesondere dann, wenn der Entlastungsdruck für die Arbeitsposition und der Dämpfungsdruck für die Vorgewende- bzw. Transportstellung auf zumindest näherungsweise gleichem oder vergleichbarem Druckniveau benötigt werden, was beispielsweise bei Mähmaschinen und Mähaggregaten der Fall sein kann, die in der abgesenkten Arbeitsposition eine relativ starke Gewichtsentlastung benötigen bzw. eine solche von Vorteil ist.

In Weiterbildung der Erfindung kann der Dämpfungsdruck einerseits und der Entlastungsdruck andererseits auch dann gleichermaßen vom selben Druckspeicher, insbesondere dem Entlastungsdruckspeicher, bereitgestellt werden, wenn die genannten Dämpfungs- und Entlastungsdrücke verschieden sind. Dies kann beispielsweise dadurch erreicht werden, dass der vom Entlastungsdruckspeicher bereitgestellte Druck entsprechend variiert werden kann.

Wird der Dämpfungsdruck in der Vorgewende- und/oder Transportstellung vom Entlastungsdruckspeicher bereitgestellt bzw. auf den Hubzylinder gegeben, kann vorteilhafterweise vorgesehen werden, den für die Gewichtsentlastung in der abgesenkten Arbeitsstellung oft niedrigeren Entlastungsdruck beim Anheben der Maschine automatisch auf das Niveau des in der Vorgewende- und/oder Transportstellung benötigten Dämpfungsdruck zu erhöhen, wobei der Zusatzdruck von der Hubbewegung des Arbeitsaggregats abgeleitet werden kann. Beispielsweise kann eine Hubdruckseite des Hubzylinders, die beim Anheben des Arbeitsaggregats von einer Druckquelle her, bspw. von der Hydraulikversorgung des Schleppers her, druckbeaufschlagt ist, über eine Druckübertragungseinrichtung mit dem Entlastungsdruckspeicher verbunden werden. Da beim Anheben der Maschine der Druck im Hubzylinder gegenüber der Arbeitsstellung deutlich ansteigt, kann durch Druckübertragung im Entlastungsdruckspeicher beim Anheben einen ausreichenden Druckanstieg erzeugt werden, um den Druck im Entlastungsdruckspeicher vom niedrigeren Entlastungsdruck auf den höheren Dämpfungsdruck zu treiben, der dann zur Dämpfung von Bewegungen in der Vorgewende- bzw. Transportstellung dienen kann. Der Entlastungsdämpfer kann hierzu derart beschaffen sein, dass er auch beim erhöhten Dämpfungsdruck noch als Druckspeicher arbeitet, d.h. unter erhöhtem Dämpfungsdruck Volumenänderungen zulässt und anders als im Stand der Technik noch nicht auf Anschlag gefahren ist, um als Dämpfer arbeiten zu können. Die genannte Druckerhöhung auf Dämpfungsdruck ist so beschaffen, dass sie den Entlastungsdämpfer nicht auf Anschlag treibt.

Eine solche Druckübertragungseinrichtung zur Erzeugung des Zusatzdrucks im Entlastungsdruckspeicher beim Anheben der Maschine kann grundsätzlich verschieden beschaffen sein und an die Ausbildung des Entlastungskreises angepasst sein. Wird beispielsweise mit kompressiblen Medien wie Gas im Entlastungskreis gearbeitet, könnte eine zusätzliche Gasmenge in den Entlastungskreis hineingedrückt werden. Wird andererseits mit einem zumindest näherungsweise inkompressiblen Druckmedium wie beispielsweise Hydrauliköl gearbeitet, das von einem Druckaktor wie beispielsweise einem Federkolben oder einem Druckmembranspeicher beaufschlagt wird, kann auch das Volumen des mit dem inkompressiblen Druckmedium befüllten Druckkreis reduziert werden, um eine Druckerhöhung zu erreichen.

In vorteilhafter Weiterbildung der Erfindung besitzt die Druckübertragungseinrichtung eine Volumensteuervorrichtung, die eine beim Anheben des Arbeitsaggregats im Druckkreis des Entlastungszylinders erzeugte Volumenänderung steuert, insbesondere dergestalt, dass eine Volumenänderung vorbestimmter Größe erzeugt wird.

Die Volumensteuervorrichtung kann dabei grundsätzlich verschieden ausgebildet sein, beispielsweise über Ventile eine entsprechende Volumenänderung steuern. Alternativ oder zusätzlich kann die Druckübertragungseinrichtung auch einen Steuerzylinder mit zumindest zwei Druckkammern aufweisen, dessen eine Druckkammer mit der Hubdruckseite des Hubzylinders und dessen andere Druckkammer mit der Entlastungsdruckseite des Entlastungszylinders verbindbar ist. Dieser Steuerzylinder bildet eine im Hubzylinder auftretende Druckänderung in eine Volumenänderung und damit eine Druckänderung im Entlastungsdruckspeicher ab, die der Differenz zwischen gewünschtem Entlastungsdruck und gewünschtem Dämpfungsdruck entspricht. Der im Hubzylinder entstehende Hubdruck wird also nicht unmittelbar in den Druckkreis des Entlastungszylinders gegeben, sondern in eine Stellbewegung des Kolbens des Steuerzylinders umgesetzt, der dann eine entsprechende Volumenveränderung im Entlastungskreis und damit einhergehend die gewünschte Druckerhöhung bewirkt.

Durch die Verwendung des genannten Steuerzylinders kann die Erzeugung des Zusatzdrucks im Entlastungskreis sowohl hinsichtlich der Höhe des erzeugten Drucks als auch hinsichtlich der Volumenänderung variabel angepasst werden. Beispielsweise kann durch unterschiedlich große Querschnittsflächen der beiden genannten Druckkammern des Steuerzylinders eine größere Druckänderung im Hubzylinder in einen kleineren Zusatzdruck-Anstieg im Entlastungszylinder oder umgekehrt umgesetzt werden.

In vorteilhafter Weiterbildung der Erfindung kann der Entlastungsdruck, der vom Entlastungsdruckspeicher bereitgestellt wird, auch für die Arbeitsposition des Arbeitsaggregats variabel eingestellt bzw. verändert werden, um die Gewichtsentlastung an verschiedene Randbedingungen jeweils optimal anpassen zu können.

Insbesondere kann eine Druckeinstellvorrichtung eine automatisierte Veränderung des Entlastungsdrucks in der Arbeitsposition in Abhängigkeit zumindest eines Betriebsparameters der landwirtschaftlichen Maschine einstellen, wobei der genannte Betriebsparameter die Bodenbeschaffenheit, beispielsweise Bodenhärte oder - weichheit und/oder Bodenfeuchte sein kann. Beispielsweise kann für feuchte Böden ein höherer Entlastungsdruck vorgesehen werden, um ein zu tiefes Einsinken des Arbeitsaggregats zu vermeiden.

Alternativ oder zusätzlich kann die Druckeinstellvorrichtung als Betriebsparameter auch die Arbeitsbreite der landwirtschaftlichen Maschine für die Einstellung des Entlastungsdrucks berücksichtigen, insbesondere im Sinne einer auskragenden Länge des Hubarms, an dem das Arbeitsaggregat aufgehängt ist, beispielsweise im Sinne einer austeleskopierbaren Tragarmlänge. Wird der Hubarm bzw. Tragarm länger gemacht, um eine größere Arbeitsbreite einzustellen, kann der Entlastungsdruck entsprechend erhöht werden, um trotz dann für die Gewichtsentlastung schlechterer Hebelverhältnisse eine entsprechende Gewichtsentlastung bereitzustellen.

Alternativ oder zusätzlich kann auch ein Rüstzustand der Maschine von der Druckeinstellvorrichtung berücksichtigt werden. Werden beispielsweise zusätzliche Anbauteile am Arbeitsaggregat angebaut, beispielsweise ein Konditionierer an ein Mähwerk, kann das sich dadurch erhöhte Aggregatsgewicht durch einen höheren Entlastungsdruck kompensiert werden.

Die genannte Druckeinstellvorrichtung kann dazu ausgebildet sein, ein Sensorsignal einer entsprechenden Sensorik zu verarbeiten, wobei die genannte Sensorik zur Erfassung von zumindest einem der genannten Betriebsparameter ausgebildet sein kann, beispielsweise einen Sensor zum Erfassen der Bodenfeuchte oder einer anderen Bodeneigenschaft umfassen kann und/oder einen Sensor zum Erfassen der Arbeitsbreite und/oder der Kraglänge des Hubarms umfassen kann und/oder einen Sensor zum Erfassen des Rüstzustands aufweisen kann, beispielsweise einen Kontaktsensor, der beim Anbau eines Konditionierers an ein Mähwerk ein Signal abgibt.

Mit Hilfe einer solchen Sensorik kann die Druckeinstellvorrichtung weitgehend vollautomatisch arbeiten und den sensorisch erfassten Betriebsparameter berücksichtigen.

Alternativ oder zusätzlich kann die Druckeinstellvorrichtung auch halbautomatisch arbeiten bzw. dazu ausgebildet sein, ein Auswahlsignal zu berücksichtigen, welches auf Abfrage und/oder in Beantwortung eines Auswahlmenüs über eine Eingabeeinrichtung wie z.B. ein Touchpanel eingebbar ist und von der Druckeinstellvorrichtung verarbeitet wird. Beispielsweise kann auf einem Maschinenterminal oder einer anderen Anzeigevorrichtung wie einem Mobiltelefon eine Abfrage nach der Bodenbeschaffenheit erfolgen, beispielsweise im Sinne von "Boden trocken - Boden feucht - Boden sehr feucht ?", woraufhin ein Maschinennutzer eine der angebotenen Antworten beispielsweise anklicken oder auf einem Touch-Panel antippen oder durch Spracheingabe über eine Spracherkennung oder in anderer Weise eingeben kann. Das hierdurch generierte Auswahlsignal wird von der Druckeinstellvorrichtung in entsprechender Weise verarbeitet, um den Entlastungsdruck einzustellen.

In ähnlicher Weise kann über ein Auswahlmenü oder eine Abfrage die Arbeitsbreite der Maschine abgefragt und/oder ausgewählt werden und/oder ein Rüstzustand abgefragt bzw. in einem Auswahlmenü bereitgestellt werden, so dass ein entsprechendes Auswahlsignal in ähnlicher Weise generiert und der Druckeinstellvorrichtung bereitgestellt werden kann.

Alternativ oder zusätzlich zu einer solchen variablen Einstellbarkeit des Entlastungsdrucks in der Arbeitsposition kann auch der Dämpfungsdruck für die Vorgewende- und/oder Transportstellung ggf. variabel eingestellt bzw. an verschiedene Betriebsparameter angepasst werden. Vorteilhafterweise kann eine solche variable Einstellung des Dämpfungsdrucks von einer Druckeinstellvorrichtung automatisiert bewerkstelligt werden, und zwar insbesondere in Abhängigkeit zumindest eines Betriebsparameters umfassend die Arbeitsbreite und/oder den Rüstzustand der Maschine und/oder auch eine Boden- und/oder Fahrbahnbeschaffenheit, die unterschiedliche Dämpfungsdrücke erfordern kann.

Beispielsweise kann für stärker unebene Böden und/oder sehr schlechte, löchrige Straßen ein höherer Dämpfungsdruck vorteilhaft sein als für weichere, glattere Böden oder bessere Straßenbeläge.

Alternativ oder zusätzlich kann bei größeren Arbeitsbreiten und damit einhergehend längeren Hubarmen und schlechteren Hebelverhältnissen im Vorgewende ein höherer Dämpfungsdruck sinnvoll sein als bei kürzeren Hubarmen bzw. kleineren Arbeitsbreiten.

In ähnlicher Weise kann bei zusätzlich angebauten Anbauteilen am Arbeitsaggregat wie beispielsweise dem genannten Konditionierer an einem Mähwerk ebenfalls ein höherer Dämpfungsdruck im Vorgewende bzw. in der Transportstellung sinnvoll sein.

Die genannte Druckeinstellvorrichtung kann die entsprechende Veränderung des Dämpfungsdrucks mit Hilfe einer Sensorik vollautomatisch einstellen und auf ein entsprechendes Sensorsignal reagieren, wobei die Sensorik in der zuvor schon genannten Weise ausgebildet sein kann, um den entsprechenden Betriebsparameter erfassen zu können.

Alternativ oder zusätzlich kann die Druckeinstellvorrichtung auch hier, d.h. für die variable Einstellung des Dämpfungsdrucks, dazu ausgebildet sein, auf ein Abfragesignal zu reagieren und den Dämpfungsdruck in Abhängigkeit eines solchen Abfragesignals variabel einzustellen, wobei in der schon genannten Weise über ein Abfragemenü oder ein Auswahlmenü der jeweiligen Betriebsparameter abgefragt werden kann, um ein bedienergeneriertes Auswahlsignal bereitzustellen, welches dann von der Druckeinstellvorrichtung automatisiert zur Einstellung des Dämpfungsdrucks verwendet wird.

Der Entlastungsdruckspeicher und/oder der Dämpfungsdruckspeicher können grundsätzlich verschieden ausgebildet sein, bspw. mit einem zumindest näherungsweise inkompressiblen Druckmedium arbeiten. Der jeweilige Druckspeicher kann bspw. mittels einer mechanischen Feder arbeiten, vorteilhafterweise jedoch auch eine Gasdruckfeder besitzen. Vorteilhafterweise kann eine Einstellungsvorrichtung zur Einstellung des Entlastungs- bzw. Dämpfungsdrucks vorgesehen sein.

In Weiterbildung der Erfindung kann der Hubzylinder doppelt wirkend ausgebildet sein, wobei die Hubdruckkammer bei entsprechender Druckbeaufschlagung eine Aushubbewegung in die Vorgewende- und/oder Transportstellung generieren kann, während die gegenläufig wirkende Absenkdruckkammer eine Absenkbewegung aus der Vorgewende- und/oder Transportstellung zur Arbeitsstellung hin generieren kann. Letzteres kann beispielsweise vorteilhaft sein, um das Arbeitsaggregat auch aus einer überstreckten Transportstellung verlässlich zurück nach unten befördern zu können. Letzteres, d.h. eine überstreckte Stellung des Arbeitsaggregats liegt dann vor, wenn der Hubarm mit dem daran befestigten Arbeitsaggregat mit dem gemeinsamen Schwerpunkt über die Schwenkachse hinweg in eine Transportstellung manövriert wird, um eine besonders kompakte Transportanordnung zu schaffen.

Wird ein solcher doppelt wirkender Hubzylinder verwendet, kann es in Weiterbildung der Erfindung vorteilhaft sein, den Dämpfungsdruck bzw. ggf. auch unterschiedliche Dämpfungsdrücke auf beide Kammern zu geben, d.h. die Hubdrucckammer und die Absenkdruckkammer, so dass der Hubarm und damit das daran gelagerte Arbeitsaggregat in der Vorgewende- und/oder Transportstellung sozusagen eingesperrt ist, sich aber in beide Richtungen bewegen kann und in beiden Richtungen eine Bewegungsdämpfung erfolgt, also sowohl bei Aufwärtsbewegungen als auch bei Abwärtsbewegungen.

In Weiterbildung der Erfindung kann die genannte Senkdruckkammer in der ausgehobenen Vorgewende- und/oder Transportstellung mit einem Dämpfungsdruck aus dem genannten oder auch einem weiteren Dämpfungsdruckspeicher beaufschlagt werden, oder auch mit einem Dämpfungsdruck aus dem Entlastungsdruckspeicher beaufschlagt werden. Die Hubdruckkammer des Hubzylinders kann in der beschriebenen Weise mit einem Dämpfungsdruck aus dem Dämpfungsdruckspeicher oder ggf. auch aus dem Entlastungsdruckspeicher beaufschlagt werden.

Eine vorteilhafte Ausgestaltung kann darin bestehen, die Hubdruckkammer mit einem höheren Dämpfungsdruck aus dem Dämpfungsdruckspeicher zu beaufschlagen und die Senkdruckkammer mit dem niedrigeren Entlastungsdruck aus dem Entlastungsdruckspeicher zu beaufschlagen, wenn sich das Arbeitsaggregat in der genannten Vorgewende- und/oder Transportstellung befindet. Mit anderen Worten kann ein niedrigerer Dämpfungsdruck zum Dämpfen von Aufwärtsbewegungen und ein höherer Dämpfungsdruck zum Dämpfen von Abwärtsbewegungen vorgesehen werden.

Der Entlastungszylinder und der Hubzylinder können grundsätzlich in verschiedener Art und Weise an der Landmaschine angeordnet werden, beispielsweise parallel zueinander zwischen dem Arbeitsaggregat und einem Anbau- bzw. Tragrahmen angeordnet sein. In besonders vorteilhafter Weiterbildung der Erfindung sind der Hubzylinder und der Entlastungszylinder in Reihe hintereinander angeordnet, wobei insbesondere der Hubzylinder und der Entlastungszylinder durch eine gemeinsame Kolbenstange miteinander verbunden sein können.

Die Erfindung wird nachfolgend anhand eines bevorzugten Ausführungsbeispiels und zugehöriger Zeichnungen näher erläutert. In den Zeichnungen zeigen:
- Fig. 1:: eine perspektivische, schematische Ansicht einer landwirtschaftlichen Maschine nach einer vorteilhaften Ausführung der Erfindung in Form einer Heuwerbungsmaschine, die als Kreiselschwader ausgebildet sein kann, wobei die Maschine in der abgesenkten Arbeitsposition gezeigt und an einen Schlepper angebaut ist,
- Fig. 2:: eine Draufsicht auf die landwirtschaftliche Maschine aus Fig. 1 in der Arbeitsstellung,
- Fig. 3:: eine Heckansicht der landwirtschaftlichen Maschine aus den vorhergehenden Figuren in der abgesenkten Arbeitsstellung der Arbeitsaggregate,
- Fig. 4:: eine Heckansicht der landwirtschaftlichen Maschine ähnlich Fig. 3, wobei die Arbeitsaggregate in Form der Rechkreisel in der ausgehobenen Vorgewendestellung gezeigt sind,
- Fig. 5:: eine ausschnittsweise Frontansicht eines Hubarms für eines der Arbeitsaggregate in der ausgehobenen Vorgewendestellung, wobei der an den schwenkbar gelagerten Hubarm angelenkte Hubzylinder und der damit über eine gemeinsame Kolbenstange verbundene Entlastungszylinder gezeigt sind,

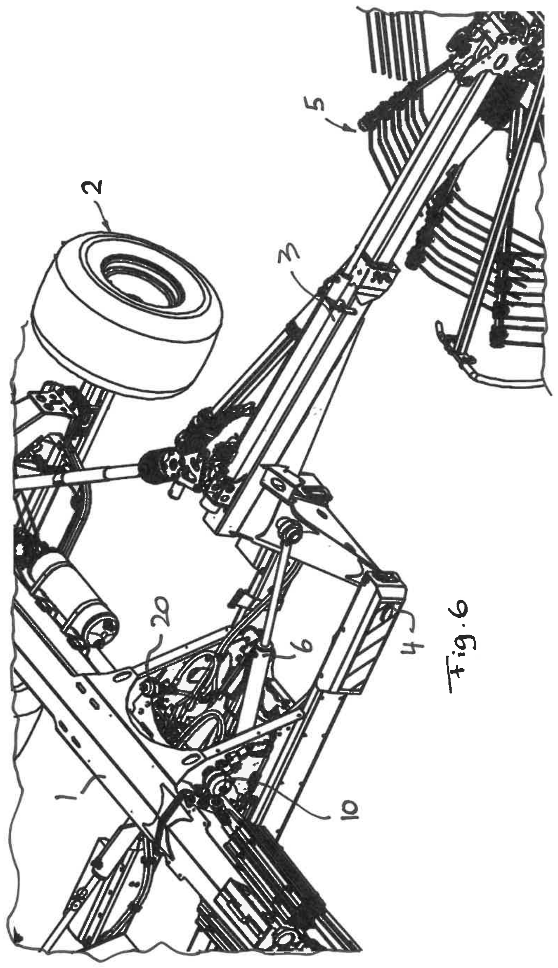

- Fig. 6:: eine ausschnittsweise, perspektivische Darstellung des Anlenkbereichs des aufschwenkbaren Hubarms mit den daran angelenkten Hub- und Entlastungszylindern, wobei auch der Entlastungsdruckspeicher zur Beaufschlagung des Entlastungszylinder mit einem Entlastungsdruck und der Dämpfungsdruckspeicher zum Beaufschlagen des Hubzylinders mit dem Dämpfungsdruck gezeigt sind
- Fig. 7:: eine perspektivische, ausschnittsweise Ansicht des Hubtragarms ähnlich Fig. 6, die die Anlenkung des Hubtragarms und die Anlenkung der Hub- und Entlastungszylinder zeigt,
- Fig. 8:: einen Hydraulikschaltplan zur Beaufschlagung der Hubdruckkammer des Hubzylinders mit einem Dämpfungsdruck aus einem Dämpfungsdruckspeicher und einem Entlastungsdruck aus einem Entlastungsdruckspeicher, der über eine Ventileinrichtung absperrbar und freischaltbar ist,
- Fig. 9:: einen Hydraulikschaltplan, der die Anbindung mehrerer Entlastungs- und/oder Dämpfungsdruckspeicher über jeweilige Ventileinrichtungen an die Hubdruckkammer des Hubzylinders zeigt,

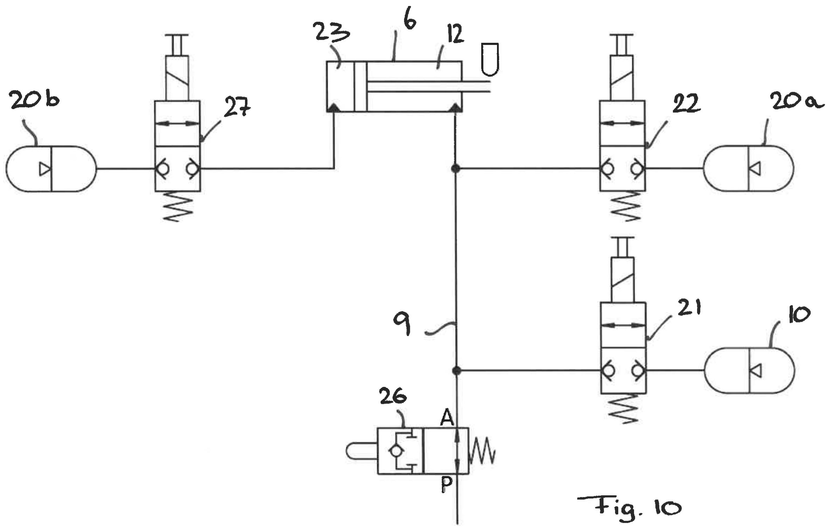

- Fig. 10:: einen Hydraulikschaltplan nach einer weiteren Ausführungsform, bei der der Hubzylinder doppelt wirkend ausgebildet ist und auf beiden Seiten mit einem Dämpfungsdruck beaufschlagbar ist, wobei insbesondere die Hubdruckkammer einerseits mit einem Dämpfungsdruck aus einem Dämpfungsdruckspeicher und andererseits mit einem Entlastungsdruck aus einem Entlastungsdruckspeicher beaufschlagbar ist und die Absenkkammer mit einem Dämpfungsdruck aus einem weiteren Dämpfungsdruckspeicher beaufschlagbar ist, wobei die jeweiligen Druckspeicher über Ventileinrichtungen absperrbar und freischaltbar sind,
- Fig. 11:: einen Hydraulikschaltplan einer weiteren Ausführungsform, bei der der Dämpfungsdruck und der Entlastungsdruck aus einem gemeinsamen Druckspeicher bereitstellbar ist, wobei der Druck im Druckspeicher mittels einer Druckübertragungseinrichtung beim Ausheben des Arbeitsaggregats automatisch erhöht werden kann,

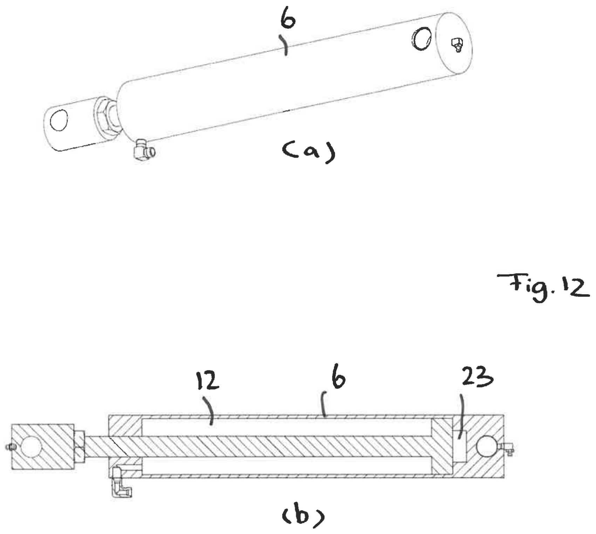

- Fig. 12:: eine Darstellung eines Hubzylinders zum Ausheben eines Arbeitsaggregats in einer doppelt wirkenden Ausführungsform, wobei die Teilansicht (a) eine perspektivische Außenansicht und die Teilansicht (b) eine Schnittansicht zeigt,
- Fig. 13:: eine Darstellung eines Hubzylinders und eines Entlastungszylinders, die über eine gemeinsame Kolbenstange miteinander verbunden sind, wobei die Teilansicht (a) eine perspektivische Außenansicht und die Teilansicht (b) eine Schnittansicht zeigt, und
- Fig. 14:: einen Hydraulikplan einer weiteren Ausführungsvariante, wonach der Dämpfungsdruckspeicher und/oder der Entlastungsdruckspeicher zwei parallel geschaltete Druckspeichereinheiten umfasst.

Die in den Figuren gezeichnete Landmaschine in Form einer Heuwerbungsmaschine, die als Kreiselschwader ausgebildet sein kann, umfasst einen Maschinenrahmen 1, der bspw. über eine an sich herkömmliche Dreipunktanlenkung oder eine Deichsel an den Schlepper 50 anbaubar sein und im Falle eines Aufsattelgeräts durch ein Fahrwerk 2 am Boden abgestützt ein kann. Der Maschinenrahmen 1 trägt eine Hubvorrichtung mit einem seitlichen Trag- bzw. Hubarm 3, der um eine liegende, in Fahrtrichtung weisende Schwenkachse 4 an dem Maschinenrahmen 1 schwenkbar angelenkt sein kann. An dem genannten Hubarm 3 ist wiederum das eigentliche Arbeitsaggregat 5 in Form eines Rechkreisels befestigt, das in an sich bekannter Weise beispielsweise rotierende Zinkentragarme mit auf der Umlaufbahn auf- und abschwenkenden Rechzinken besitzen kann.

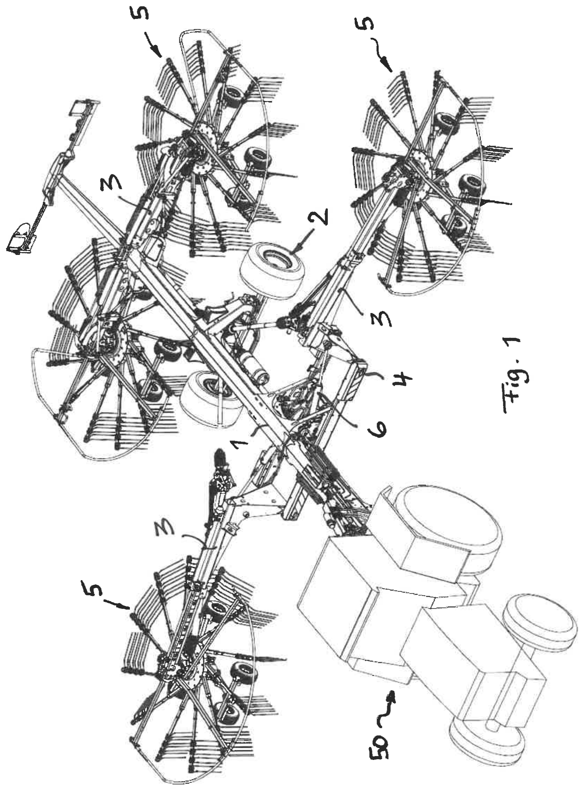

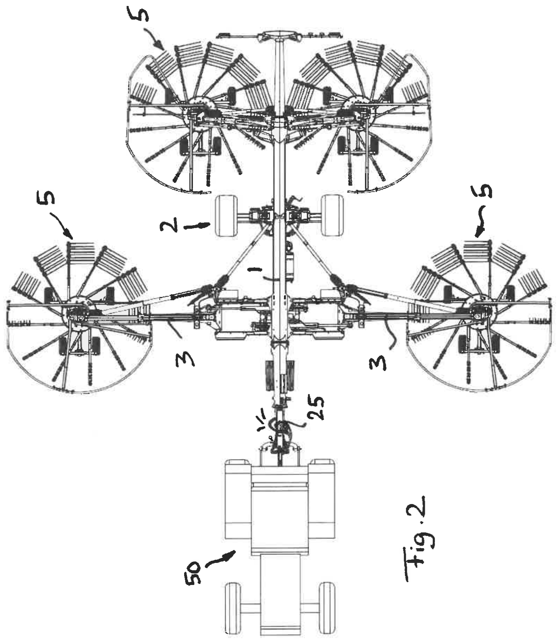

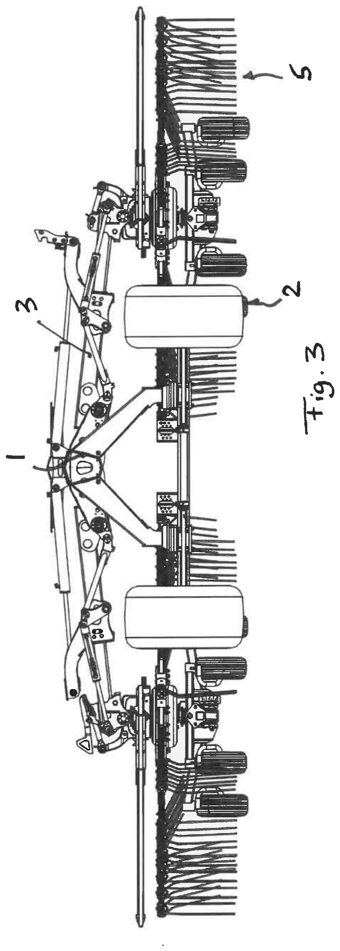

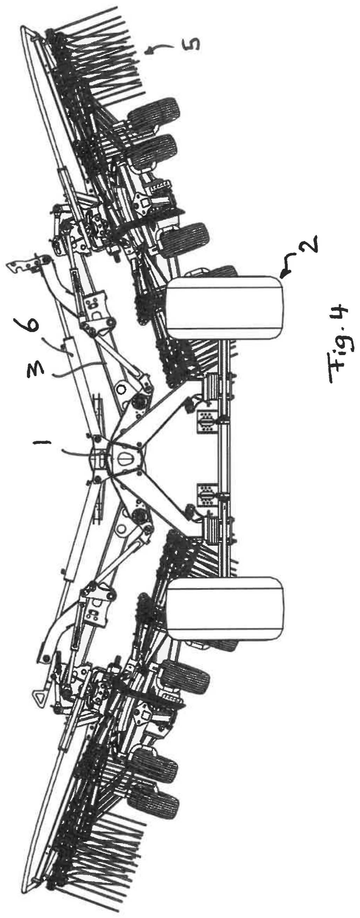

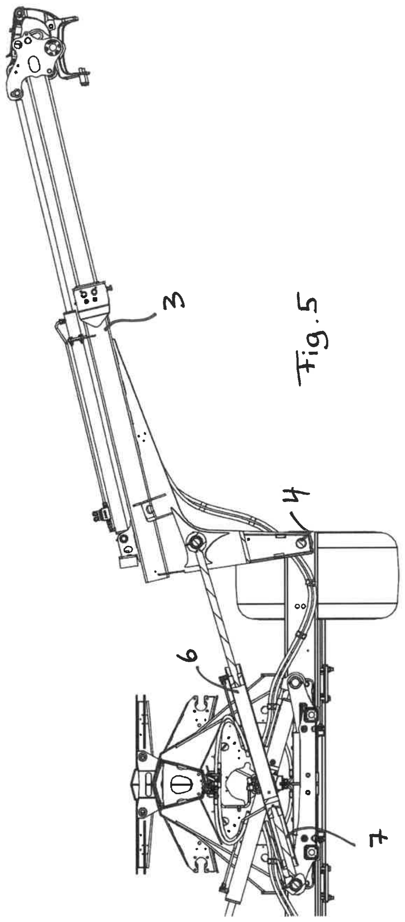

Wie die Figuren 1 und 2 zeigen, können mehrere solche Arbeitsaggregate 5 hintereinander und/oder auf verschiedenen Seiten zueinander versetzt am Maschinenrahmen 1 angeordnet und durch jeweils einen Hubarm 3 aus der abgesenkten Arbeitsstellung in die ausgehoben Vorgewende- und/oder Transportstellung angehoben werden. Die Figuren 1 bis 3 zeigen die abgesenkte Arbeitsstellung, in der die Arbeitsaggregate nahe über den Boden geführt werden. Die Figuren 4 und 5 zeigen die Arbeitsaggregate in der angehobenen Vorgewendestellung. In der Transportstellung können die Arbeitsaggregate 5 eine näherungsweise aufrechte Stellung einnehmen und gegenüber der Vorgewendestellung nochmals weiter ausgehoben sein.

Der jeweilige Hubarm 3 kann mittels eines Hubzylinders 6 um die Schwenkachse 4 angehoben und abgesenkt werden, beispielsweise um in die genannte Vorgewendestellung gemäß Figur 4 oder noch weiter nach oben in die Transportstellung bewegt zu werden. Ferner kann an dem Hubarm 3 ein Entlastungszylinder 7 angelenkt sein, mittels dessen der Hubarm 3 und damit das daran angelenkte Arbeitsaggregat 5 gewichtsentlastet werden kann, wenn sich das Arbeitsaggregat 5 in der abgesenkten, über den Boden geführten Arbeitsstellung befindet.

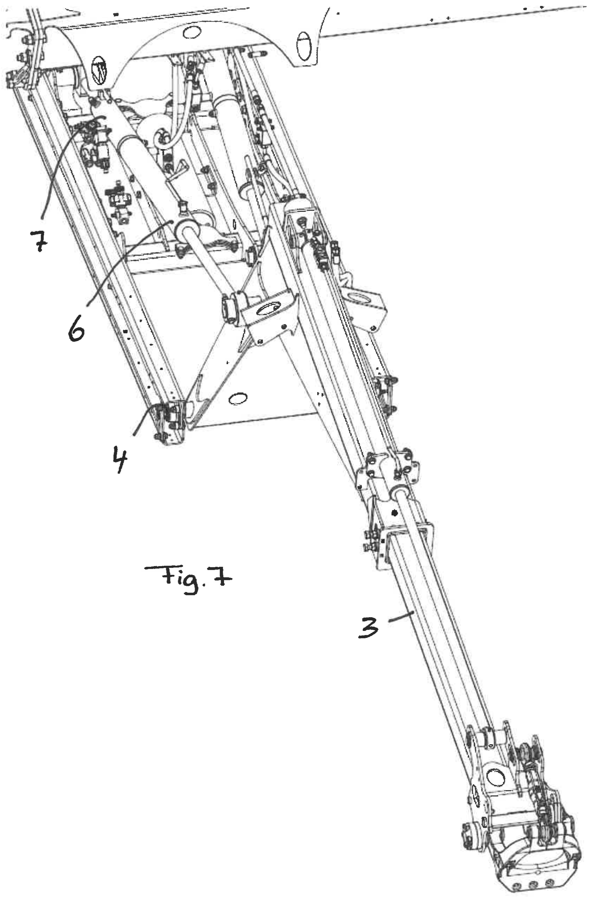

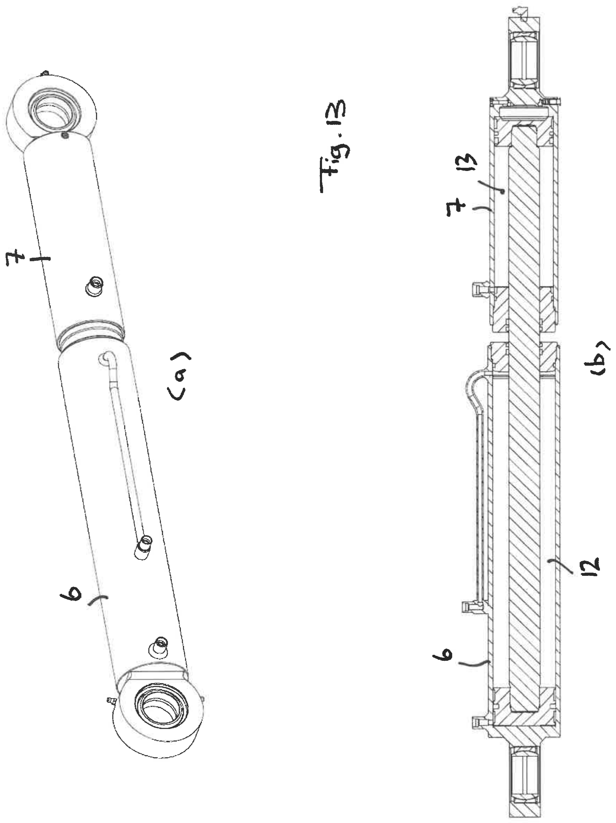

Wie die Figuren 5, 7 und 13 zeigen, können der Hubzylinder 6 und der Entlastungszylinder 7 hintereinandergeschaltet angeordnet sein, wobei sich der Hubzylinder 6 und der Entlastungszylinder 7 eine gemeinsame Kolbenstange 8 teilen können, die in jeden der Zylinder 6 und 7 eingefahren und aus diesen wieder ausgefahren werden kann. Die beiden Zylinder 6 und 7 sind sozusagen kettenförmig hintereinander angeordnet und nehmen gegenüberliegende Enden der Kolbenstange 8 auf. Der Hubzylinder 6 und der Entlastungszylinder 7 können hierbei jeweils als einfach wirkende Zylinder ausgebildet sein. Es ist ausreichend, wenn jeder der Zylinder 6 und 7 nur eine einzige Druckkammer besitzt, die zwischen dem Ende der Kolbenstange 8 und dem jeweiligen Kragen des Zylinders 6 bzw. 7, aus dem die Kolbenstange 8 austritt, vorgesehen ist, so dass die Kolbenstange 8 bei Druckbeaufschlagung des jeweiligen Zylinders in diesen eingefahren werden kann, um den Hubarm 3 und damit das Arbeitsaggregat 5 anzuheben bzw. gewichtszuentlasten.

Wie die Figuren zeigen, kann der Hubzylinder 6 mittels einer Druckleitung 9 beispielsweise vom Schlepper her mit Hubdruck beaufschlagt werden, um das Arbeitsaggregat 5 in die Vorgewende- und/oder Transportstellung auszuheben.

Andererseits wird der Entlastungszylinder 7 von einem Druckspeicher 10 her mit einem Entlastungsdruck beaufschlagt. Der Druckspeicher 10 kann hierbei vorteilhafterweise eine Druckeinstellvorrichtung 11 zur Einstellung des Entlastungsdrucks besitzen, wobei die genannte Druckeinstellvorrichtung 11 beispielsweise ein Befüll-/ Entlastungsventil aufweisen kann, über das eine eine Federeinrichtung bildende Gasdruckkammer befüllt bzw. entlastet werden kann.

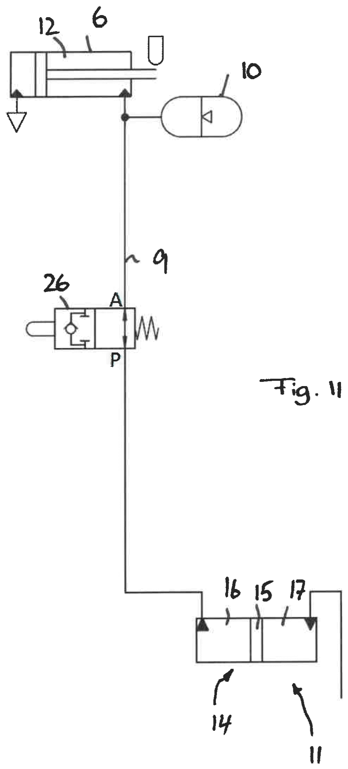

Wie Fig. 11 zeigt, kann zwischen der Hochdruckleitung 9 zum Ausheben des Arbeitsaggregats 5 und Hubdruckkammer 12 des Hubzylinders 6 und dem Entlastungsdruckspeicher 10, der den Entlastungszylinder 7 beaufschlagt, eine Druckübertragungseinrichtung 13 vorgesehen sein, die in dem Hubzylinder 6 anstehenden Druck bzw. eine dort beim Anheben stattfindende Druckänderung in Form eines Zusatzdrucks auf den Entlastungszylinder 7 überträgt.

Die genannte Druckübertragungseinrichtung 13 umfasst hierbei vorteilhafterweise einen Steuerzylinder 14, der zwei von einem verschieblichen Kolben 15 getrennte Druckkammern 16 und 17 aufweist, von denen die eine mit der Hubdruckseite des Hubzylinders 6 und die andere mit der Entlastungsdruckseite des Entlastungszylinders 7 verbunden ist. In der gezeichneten Ausführung sind die beiden Druckkammern 16 und 17 hierbei an die Druckleitungen 18 bzw. 9 angeschlossen, die den Hubzylinder 6 vom Schlepper her bzw. den Entlastungszylinder 7 vom Druckspeicher 10 her jeweils mit Druck beaufschlagen.

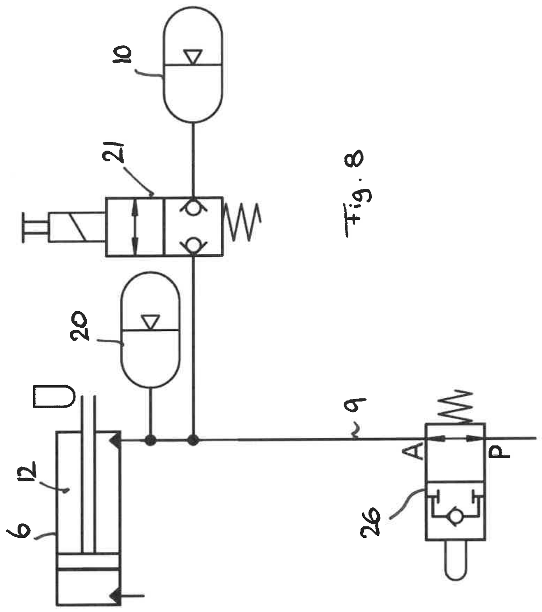

Wie Fig. 8 zeigt, können der Dämpfungsdruckspeicher 20 und der Entlastungsdruckspeicher 10 jedoch auch beide die Hubdruckkammer 12 des Hubzylinders 6 beaufschlagen, wobei vorteilhafterweise der Entlastungsdruckspeicher 10 über eine Ventileinrichtung 21 abgesperrt und freigeschaltet werden kann, im den Entlastungsdruck aus dem Entlastungsdruckspeicher 10 insbesondere nur in der abgesenkten Arbeitsposition auf den Hubzylinder 6 zu geben, d.h. die Ventileinrichtung 21 kann so angesteuert werden, dass sie den Entlastungsdruckspeicher beim Ausheben in die Vorgewende- und/oder Transportstellung absperrt und umgekehrt beim Absenken des Arbeitsaggregats 5 in die Arbeitsposition freischaltet. Die genannte Ventileinrichtung 21 kann beispielsweise druckgesteuert sein, beispielsweise durch den Aushubdruck in der Druckleitung 9.

Der Dämpfungsdruckspeicher 20 kann mit dem Hubzylinder 6 permanent strömungsverbunden sein, insbesondere dann, wenn der Dämpfungsdruckspeicher 20 auf einem deutlich höheren Druckniveau arbeitet als der Entlastungsdruckspeicher 10. Wird nämlich das Arbeitsaggregat 5 abgesenkt, fällt in der Druckleitung 9 der Druck stark ab, wodurch sich der Dämpfungsdruckspeicher 20 entleert bzw. gegen Anschlag fährt und/oder eine Endstellung erreicht, so dass der Dämpfungsdruckspeicher 20 faktisch inaktiv wird.

Bei ausreichender Differenz zwischen dem Dämpfungsdruck und dem Entlastungsdruck könnte an sich auch auf die Ventileinrichtung 21 zum Absperren des Entlastungsdruckspeichers 10 verzichtet werden, da je nach Druck in der Druckleitung 9 entweder der Dämpfungsdruckspeicher 20 - in der genannten Weise - auf Anschlag fährt und inaktiv wird oder der Entlastungsdruckspeicher 10 auf Anschlag fährt und inaktiv wird. Letzteres tritt ein, d.h. der Entlastungsdruckspeicher 10 würde auf Anschlag fahren, wenn beim Ausheben des Arbeitsaggregats 5 in die Vorgewende- bzw. Transportstellung in der Druckleitung 9 der Druck vom Schlepper her kommend stark ansteigt, wodurch gleichzeitig zum Inaktivwerden des Entlastungsdruckspeichers 10 der Dämpfungsdruckspeicher 20 aktiv wird, da er sich dann von seiner Anschlagposition wegbewegt und in den aktiven Bereich wechselt.

Die jeweils gewünschte Stellung des Arbeitsaggregats 5 kann durch die Ventileinrichtung 26 fixiert bzw. eingefroren werden. Durch Absperren der Druckleitung 9 in der Arbeitsposition wird der Entlastungsdruck vom Entlastungsdruckspeicher 10 auf den Hubzylinder 6 gegeben. In der Vorgewendestellung bzw. Transportstellung wird der Dämpfungsdruck bei abgesperrter Druckleitung 9 auf den Hubzylinder 6 gegeben.

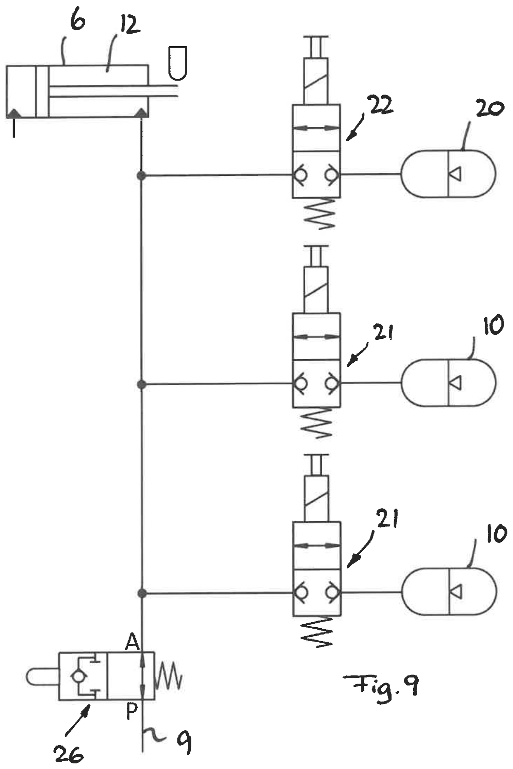

Wie Fig. 9 zeigt, können auch mehr als zwei Druckspeicher Verwendung finden, beispielsweise zwei Dämpfungsdruckspeicher und ein Entlastungsdruckspeicher oder auch zwei Entlastungsdruckspeicher und ein Dämpfungsdruckspeicher, um durch jeweils kombinatorisches Freischalten bzw. Absperren der mehreren Druckspeicher unterschiedliche Druckniveaus in der Vorgewende- bzw. Transportstellung erzeugen zu können oder alternativ auch verschiedene Druckniveaus in der abgesenkten Arbeitsposition erzeugen zu können. Werden beispielsweise zwei Entlastungsdruckspeicher 10 verwendet, die mit unterschiedlichem Druckniveau arbeiten, kann durch Freischalten und Absperren des anderen bzw. umgekehrt ein jeweils unterschiedlich hohes Entlastungsdruckniveau auf den Entlastungszylinder 7 oder auf den Hubzylinder 6 gegeben werden. In ähnlicher Weise kann dies auch für die Vorgewendestellung bzw. Transportstellung und den dort auf den Hubzylinder 6 gegebenen Dämpfungsdruck bewerkstelligt werden.

Wie Fig. 10 zeigt, kann es auch vorteilhaft sein, den Hubzylinder 6 in beiden Bewegungsrichtungen mit einem Dämpfungsdruck zu beaufschlagen. Beispielsweise kann die Hubdruckkammer 12 einerseits mit Dämpfungsdruck aus einem Dämpfungsdruckspeicher 20a und andererseits mit einem Entlastungsdruck aus dem Entlastungsdruckspeicher 10 beaufschlagt werden, wobei jeweils eine Ventileinrichtung 21 und 22 zum Absperren der genannten Dämpfungsdruck- und Entlastungsdruckspeicher 20a, 10 vorgesehen sein kann, vgl. Fig. 10.

Zum anderen kann die Absenkkammer bzw. Senkdruckkammer 23 des Hubzylinders 6 mit einem Dämpfungsdruck beaufschlagt werden, welcher von einem weiteren Dämpfungsdruckspeicher 20b bereitgestellt werden kann, vgl. Fig. 10, welcher über eine Ventileinrichtung 27 abgesperrt werden kann, beispielsweise um in der abgesenkten Arbeitsposition nicht dem Entlastungsdruck entgegenzuwirken.

Anders als in Fig. 10 dargestellt wäre es aber auch möglich, die genannte Senkdruckkammer 23 mit einem Dämpfungsdruck aus dem Entlastungsdruckspeicher 10 zu beaufschlagen, wobei dann in der ausgehobenen Vorgewende- und/oder Transportstellung der Dämpfungsdruckspeicher 20 auf die Hubdruckkammer 12 geschaltet und der Entlastungsdruckspeicher 10 mit der Senkdruckkammer 23 strömungsverbunden geschaltet wäre, so dass dann ggf. unterschiedlich hohe Dämpfungsdrücke auf die beiden Hubdruck- und Senkdruckkammern 12, 23 gegeben werden kann, wobei letzteres auch im Falle eines zusätzlichen Dämpfungsdruckspeichers 20b wie in Fig. 10 gezeigt möglich sein kann.

In der abgesenkten Arbeitsposition würde der Dämpfungsdruckspeicher 20 abgesperrt werden bzw. durch Abfallen des Drucks in der Druckleitung 9 auf Anschlag fahren und hierdurch inaktiv werden, während der Entlastungsdruckspeicher 10 von der Senkdruckkammer 23 abgesperrt und mit der Hubdruckkammer 12 verbunden werden könnte.

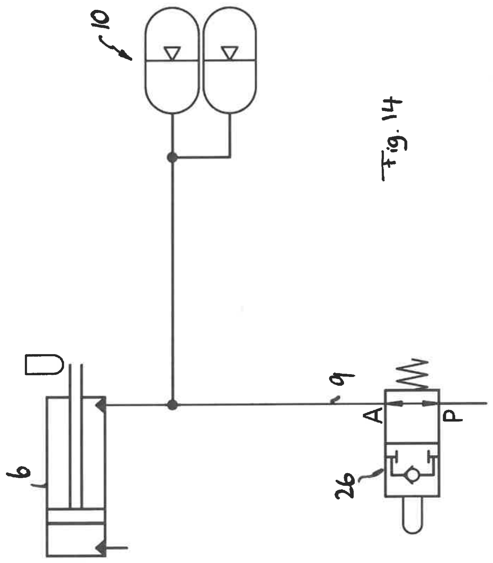

Wie Fig. 14 verdeutlicht, kann der Entlastungsdruckspeicher 10 auch zwei zueinander parallel geschaltete Entlastungsdruckeinheiten umfassen. Selbiges ist ebenfalls auch für den Dämpfungsdruckspeicher 20 möglich, um eine Redundanz und/oder einen größeren Stellbereich durch ein größeres Verdrängungsvolumen zu erreichen.

## Patentansprüche

1. Landwirtschaftliche Maschine zum Anbau an einen Schlepper, vorzugsweise in Form eines Mähwerks, Schwaders oder Mergers und dergleichen, mit einem Arbeitsaggregat (5), zumindest einem Hubzylinder (6) zum Anheben des Arbeitsaggregats (5) in eine Vorgewende- und/der Transportstellung, sowie einem Entlastungsdruckspeicher (10) zur Beaufschlagung des Hubzylinders (6) und/oder eines zusätzlichen Entlastungszylinders (7) mit einem Entlastungsdruck zum Gewichtsentlasten des Arbeitsaggregats (5) in einer abgesenkten Arbeitsstellung, **dadurch gekennzeichnet, dass** der Entlastungsdruckspeicher (10) und/oder ein zusätzlicher Dämpfungsdruckspeicher (20) in der ausgehobenen Vorgewende- und/oder Transportstellung mit dem Hubzylinder (6) strömungsverbunden ist, so dass der genannte Hubzylinder (6) in der genannten Vorgewende- und/oder Transportstellung mit einem Dämpfungsdruck aus dem Entlastungsdruckspeicher (10) und/oder dem Dämpfungsdruckspeicher (20) beaufschlagt ist.

2. Landwirtschaftliche Maschine nach dem vorhergehenden Anspruch, wobei der Dämpfungsdruck, der aus dem Dämpfungsdruckspeicher (20) in der Vorgewende- und/oder Transportstellung am Hubzylinder (6) anliegt, verschieden von dem Entlastungsdruck ist, der aus dem Entlastungsdruckspeicher (10) in der abgesenkten Arbeitsstellung am Hubzylinder (6) oder dem Entlastungszylinder (7) anliegt.

3. Landwirtschaftliche Maschine nach dem vorhergehenden Anspruch, wobei der genannte Dämpfungsdruck, der in der ausgehobenen Vorgewende- und/oder Transportstellung am Hubzylinder (6) anliegt, größer ist als der genannte Entlastungsdruck, der in der abgesenkten Arbeitsstellung am Hubzylinder (6) oder am Entlastungszylinder (7) anliegt.

4. Landwirtschaftliche Maschine nach einem der beiden vorhergehenden Ansprüche, wobei der Entlastungsdruckzylinder (10) mittels einer Ventileinrichtung (21) in der ausgehobenen Vorgewende- und/oder Transportstellung vom Hubzylinder (6) abgesperrt ist und in der abgesenkten Arbeitsstellung mit dem Hubzylinder (6) oder dem Entlastungszylinder (7) strömungsverbunden ist.

5. Landwirtschaftliche Maschine nach einem der vorhergehenden Ansprüche, wobei der Dämpfungsdruckspeicher (20) sowohl in der ausgehobenen Vorgewende- und/oder Transportstellung als auch in der abgesenkten Arbeitsstellung mit dem Hubzylinder (6) strömungsverbunden ist, wobei der Dämpfungsdruckspeicher (20) in der abgesenkten Arbeitsstellung eine Anschlag- oder Endstellung minimalen Speichervolumens einnimmt, so dass der Dämpfungsdruckspeicher (20) in der abgesenkten Arbeitsstellung wirkungslos auf den Hubzylinder (6) ist.

6. Landwirtschaftliche Maschine nach einem der Ansprüche 1 bis 4, wobei der Dämpfungsdruckspeicher (20) in der abgesenkten Arbeitsstellung mittels einer Ventileinrichtung (22) vom Hubzylinder (6) abgesperrt ist und in der ausgehobenen Vorgewende- und/oder Transportstellung mit dem Hubzylinder (6) strömungsverbunden ist.

7. Landwirtschaftliche Maschine nach der vorhergehenden Ansprüche 1 bis 5, wobei der Entlastungsdruckspeicher (10) und der Dämpfungsdruckspeicher (20) auf dieselbe Hubdruckkammer (12) des Hubzylinders (6) schaltbar sind, wobei in der abgesenkten Arbeitsstellung beide Entlastungs- und Dämpfungsdruckspeicher (10, 20) gleichzeitig mit der genannten Hubdruckkammer (12) des Hubzylinders (6) strömungsverbunden sind und in der ausgehobenen Vorgewende- und/oder Transportstellung nur der Dämpfungsdruckspeicher (20) mit der Hubdruckkammer (12) des Hubzylinders (6) strömungsverbunden ist.

8. Landwirtschaftliche Maschine nach einem der vorhergehenden Ansprüche, wobei der Entlastungsdruckspeicher (10) zwei zueinander parallel geschaltete Entlastungsdruckspeicher-Einheiten (10a, 10b) umfasst und/oder der Dämpfungsdruckzylinder (20) zwei zueinander parallel geschaltete Dämpfungsdruckzylinder-Einheiten umfasst.

9. Landwirtschaftliche Maschine nach dem vorhergehenden Anspruch, wobei die parallel geschalteten Entlastungsdruckspeicher-Einheiten unterschiedliche Druckniveaus bereitstellen und/oder die parallel geschalteten Dämpfungsdruckspeicher-Einheiten unterschiedliche Druckniveaus bereitstellen, wobei eine Ventileinrichtung (24) zum wahlweisen Freischalten und Absperren von keiner oder nur einer oder von zwei Entlastungsspeicher-Einheiten und/oder wahlweise von keiner oder nur einer oder von zwei Dämpfungsdruckspeicher-Einheiten vorgesehen ist, so dass je nach Einstellung der genannten Ventileinrichtung (24) ein unterschiedlich hoher Entlastungsdruck und/oder ein unterschiedlich hoher Dämpfungsdruck anliegt.

10. Landwirtschaftliche Maschine nach einem der vorhergehenden Ansprüche, wobei der Hubzylinder (6) doppeltwirkend ausgebildet ist und zusätzlich zur Hubdruckkammer (12) zum Ausheben des Arbeitsaggregats (5) in die genannte Vorgewende- und/oder Transportstellung eine Senkdruckkammer (23) zum Absenken des Arbeitsaggregats (5) aus der Transport- und/oder Vorgewendestellung zur abgesenkten Arbeitsstellung hin aufweist, wobei die genannte Senkdruckkammer (23) in der ausgehobenen Vorgewende- und/oder Transportstellung mit einem Dämpfungsdruck aus dem genannten oder einem weiteren Dämpfungsdruckspeicher (20) oder aus dem Entlastungsdruckspeicher (10) beaufschlagt ist, so dass das Arbeitsaggregat (5) in der ausgehobenen Vorgewende- und/oder Transportstellung in zwei Bewegungsrichtungen bewegungsgedämpft gehalten ist.

11. Landwirtschaftliche Maschine nach einem der vorhergehenden Ansprüche, wobei der in der abgesenkten Arbeitsstellung auf den Hubzylinder (6) und/oder den Entlastungszylinder (7) wirkende Entlastungsdruck variabel einstellbar ist, wobei der genannte Entlastungsdruckspeicher (10) druckveränderbar ausgebildet und/oder ein zusätzlicher Entlastungsdruckspeicher (10b) mittels einer Ventileinrichtung zuschaltbar und abschaltbar ist.

12. Landwirtschaftliche Maschine nach dem vorhergehenden Anspruch, wobei eine Druckeinstellvorrichtung (11) zum automatisierten Einstellen des Entlastungsdrucks in Abhängigkeit zumindest eines Betriebsparameters umfassend Bodenfeuchte und/oder -verhältnisse, Maschinenrüstzustand und Arbeitsbreite vorgesehen ist, wobei die genannte Druckeinstellvorrichtung dazu ausgebildet ist, auf ein Sensorsignal einer Sensorik (25) zum Erfassen der Bodenfeuchte und/oder -verhältnisse, des Maschinenrüstzustands und/oder der Arbeitsbreite und/oder auf ein Auswahlsignal, das mittels einer Eingabevorrichtung als Antwort auf eine Menüabfrage eingebbar ist, anzusprechen und den genannten Entlastungsdruck in Abhängigkeit des genannten Sensorsignals und/oder Auswahlsignals variabel einzustellen.

13. Landwirtschaftliche Maschine nach einem der vorhergehenden Ansprüche, wobei der in der ausgehobenen Vorgewende- und/oder Transportstellung auf den Hubzylinder (6) wirkende Dämpfungsdruck variabel einstellbar ist, wobei der genannte Dämpfungsdruckspeicher (20) und/oder der Entlastungsdruckspeicher (10) druckveränderbar ausgebildet sind und/oder ein zusätzlicher Dämpfungsdruckspeicher (20) oder der Entlastungsdruckspeicher (10) zusätzlich zum genannten Dämpfungsdruckspeicher (20) mittels einer Ventileinrichtung zu- und abschaltbar ist.

14. Landwirtschaftliche Maschine nach dem vorhergehenden Anspruch, wobei eine Druckeinstellvorrichtung (11) zum automatisierten Einstellen des Dämpfungsdrucks in Abhängigkeit zumindest eines Betriebsparameters umfassend Bodenfeuchte und/oder -verhältnisse, Maschinenrüstzustand und Arbeitsbreite vorgesehen ist, wobei die genannte Druckeinstellvorrichtung dazu ausgebildet ist, auf ein Sensorsignal einer Sensorik (25) zum Erfassen der Bodenfeuchte und/oder -verhältnisse, des Maschinenrüstzustands und/oder der Arbeitsbreite und/oder auf ein Auswahlsignal, das mittels einer Eingabevorrichtung als Antwort auf eine Menüabfrage eingebbar ist, anzusprechen und den genannten Dämpfungsdruck in Abhängigkeit des genannten Sensorsignals und/oder Auswahlsignals variabel einzustellen.
